# EUROPÄISCHE PATENTSCHRIFT

(11) **EP 1 398 254 B1**
(45) Veröffentlichungstag und Bekanntmachung des Hinweises auf die Patenterteilung: **29.12.2010**
(21) Anmeldenummer: 03020124.8
(22) Anmeldetag: 05.09.2003
(51) Int. Cl.: B62D 53/02, B60D 1/52, B60D 1/66, B62D 53/04, B62D 25/20, F16B 7/02

(54) **Zweierkombination mit Lenk- und Antriebseinheiten**
Combination of two drive and steering vehicle units
Tandem d'unités motodirectrices

(30) Priorität: 13.09.2002 DE 20214246 U
(43) Veröffentlichungstag der Anmeldung: 17.03.2004
(73) Patentinhaber: AL-KO Kober AG, D-89359 Kötz (DE)
(72) Erfinder: Mändle, Stefan, 86519 Oberwiesenbach (DE)
(74) Vertreter: Binder, Armin

(56) Entgegenhaltungen:
- EP-B1- 0 308 574
- DE-C- 820 090
- FR-A- 1 197 434

## Beschreibung

Die Erfindung betrifft eine Zweierkombination mit, vorzugsweise spiegelbildlich angeordneten, Lenk- und Antriebseinheiten zum kombinierten Transport von zwei Lenk- und Antriebseinheiten von selbstfahrenden, frontangetriebenen Kraftfahrzeugen, vorzugsweise von Wohnmobilen, Verkaufsfahrzeugen, Viehtransportern und Lastfahrzeuge, wobei die zwei Lenk- und Antriebseinheiten an ihren rückseitigen Enden verbunden sind.

Unter Lenk- und Antriebseinheit wird die frontseitige Baueinheit eines solchen Kraftfahrzeuges verstanden, welche den Rahmen der Lenk- und Antriebseinheit mit dem daran angeordneten Motorblock und der angetriebenen Vorderachse umfasst.

Die Lenk- und Antriebseinheiten werden individuell mit verschiedenen Chassis und Aufbauten ausgerüstet. Diese Ausrüstung findet aufgrund der vielfältigen Sonderwünsche in Spezialbetrieben statt. Um die Lenk- und Antriebseinheiten für sich fahrbar und gleichzeitig kostengünstig zu diesen Ausrüsterbetrieben transportieren zu können, werden zwei Lenk- und Antriebseinheiten mit ihren rückwärtigen. Enden fest miteinander verbunden. Eine solche gattungsbildende fahrtaugliche Anordnung von zwei Lenk- und Antriebseinheiten laut Oberbegriff des Anspruchs 1 wird in der europäischen Patentschrift EP 0 308 574 B1 der Anmelderin beschrieben. Die Verbindungsstellen zweier solcher Lenk- und Antriebseinheiten werden zum Teil mit zusätzlichen Verbindungsstücken und Flanschen zusammengeschweißt. Derartige Lenk- und Antriebseinheiten werden auch oft miteinander verschraubt. Häufig werden aus Stabilitätsgründen direkt an der Verbindungsstelle mehrere, extra angefertigte, Verbindungsplatten mit mehreren Schraubelementen befestigt.

Zwei miteinander verbundene Lenk- und Antriebseinheiten müssen zum weiteren Ausrüsten mit einem Chassis und einem Aufbau wieder voneinander getrennt werden. Die eben genannten aufwändigen Verbindungsmethoden stellen hinsichtlich der Zeit und der Kosten bei der Montage beziehungsweise Demontage an Lenk- und Antriebseinheiten einen erheblichen Aufwand dar.

Es ist daher Aufgabe der Erfindung, eine verbesserte Verbindungsmöglichkeit für zwei Lenk- und Antriebseinheiten zu schaffen, die in kürzerer Zeit an die Lenk- und Antriebseinheiten montiert, beziehungsweise von den Lenk- und Antriebseinheiten demontiert werden kann.

Diese Aufgabe wird durch die Merkmale des Anspruches 1 gelöst. Vorteilhafte Weiterbildungen der Erfindung sind Gegenstand untergeordneter Ansprüche.

Demgemäß schlägt der Erfinder vor, eine Zweierkombination mit, vorzugsweise spiegelbildlich angeordneten, Lenk- und Antriebseinheiten zum kombinierten Transport von zwei Lenk- und Antriebseinheiten von selbstfahrenden, frontangetriebenen Kraftfahrzeugen, vorzugsweise von Wohnmobilen, Verkaufsfahrzeugen, Viehtransportern und Lastfahrzeugen, wobei die zwei Lenk- und Antriebseinheiten an ihren rückseitigen Enden verbunden sind, dahingehend zu verbessern, dass eine Verbindungsvorrichtung vorgesehen ist, deren erstes Ende in ein Hohlprofil am rückseitigen Ende einer ersten Lenk- und Antriebseinheit und deren zweites Ende in ein Hohlprofil der zweiten Lenk- und Antriebseinheit eingreift, wobei Mittel vorgesehen sind, die die Verbindungsvorrichtung mit den Lenk- und Antriebseinheiten verbinden. Der Erfinder weist darauf hin, dass durch leichte Veränderungen des Aufbaus der Verbindungsvorrichtung es ermöglicht wird, zwei Lenk- und Antriebseinheiten nicht nur spiegelbildlich, sondern auch beide in gleicher Fahrtrichtung anzuordnen.

Meistens verfügt der am Heckbereich der Lenk- und Antriebseinheit zu montierende Aufbau oder die Pritsche selbst über ein eigenes Hohlprofil beziehungsweise über einen Rahmen, welcher bei der Fahrzeugkomplettierung mit dem Hohlprofil der Lenk- und Antriebseinheit verschweißt wird. Aus diesem Grund werden beim Trennen zweier verbundener Lenk- und Antriebseinheiten beide Hohlprofile möglichst nahe am rückseitigen Ende der Lenk- und Antriebseinheit gekürzt. Die Lenk- und Antriebseinheiten können bisher aber nicht mit kurzen beziehungsweise gekürzten Hohlprofilen verbunden werden, da dadurch der Radstand der Vorderachsen beider Lenk- und Antriebseinheiten zu kurz wäre und damit die sichere Fahrtauglichkeit nicht gegeben ist. Die Verbindungsvorrichtung ist derart gestaltet, dass diese an gekürzten Hohlprofilen adaptiert werden kann. Ein Abtrennen der Hohlprofile ist nunmehr nicht mehr notwendig. Vielmehr kann der Hersteller der Lenk- und Antriebseinheit diese mit kurzen Hohlprofilen ausliefern. Um einen ausreichenden Radstand zwischen beiden Achsen der beiden verbundenen Lenk- und Antriebseinheiten zu erzeugen, wird die Gesamtlänge der Verbindungsvorrichtung entsprechend angepasst.

Es ist günstig, wenn die Verbindungsvorrichtung an beiden Enden jeweils zwei Schenkel aufweist, wobei jeweils mindestens ein Schenkel schwenkbar gegenüber dem anderen Schenkel ausgeführt ist. Der bewegliche Schenkel kann zum leichteren Einführen in das Hohlprofil eng an dem benachbarten Schenkel anliegen. Sind beide Schenkel weit genug im Hohlprofil eingeführt, so kann durch Auseinanderspreizen der Schenkel im Hohlprofil eine wirkungsvolle Verklemmung und somit Verankerung der Verbindungsvorrichtung im Hohlprofil erreicht werden.

Eine Verbesserung sieht vor, das Hohlprofil an der Lenk- und Antriebseinheit in seinem Querschnitt so zu gestalten, dass sich ein konisch zum rückseitigen Ende der Lenk- und Antriebseinheit verengender Verlauf ergibt. Durch diese Hohlprofilgestaltung und die Ausführung der Verbindungsvorrichtung mit zumindest einem beweglichen Schenkel können die zum Inneren des Hohlprofils sich aufweitenden Schenkel nicht aus dem Hohlprofil herausrutschen. Die engste Querschnittstelle am Ende des Hohlprofils fungiert als Barriere.

Es ist auch günstig, wenn die schwenkbaren Schenkel an einer Lagerung befestigt sind. So ist dadurch ein leichtes Bewegen der Schenkel möglich. Eine besonders einfache Ausführung der Verbindungsvorrichtung sieht vor, diese Lagerung in Form von Bolzenelementen auszuführen, die durch Bohrungen in den Schenkeln gesteckt werden. An den Enden der Achsen können Halteplatten befestigt sein, die die Stabilität der gesamten Verbindungsvorrichtung verbessern.

In einer besonderen Ausgestaltung ist es vorgesehen, mindestens einen Bolzen an mindestens einem Schenkel der Verbindungsvorrichtung zu befestigen. Dieser Bolzen kann als zusätzliche Sicherheitseinrichtung fungieren. Zusätzlich zu den verklemmten Schenkeln bietet der Bolzen eine weitere mechanische Verankerung der Verbindungsvorrichtung im Hohlprofil. Im Fall unzureichender Klemmwirkung der Schenkel wird so verhindert, dass die Verbindungsvorrichtung aus dem Hohlprofil herausgleitet.

Der Bolzen kann an den Schenkeln angeschweißt oder angeschraubt sein. Werden die Schenkel in das Hohlprofil eingeschoben, sollte am Befestigungsort der Bolzen passende Bohrungen im Hohlprofil der Lenk- und Antriebseinheit vorhanden sein, in die die Bolzen eingreifen können. Im Sinne des Erfinders ist es aber auch, einen Bolzen durch zwei deckungsgleiche Bohrungen im Hohlprofil und im Schenkel zu stecken, um Hohlprofil und Schenkel zu verbinden.

In einer weiteren Variante der Verbindungsvorrichtung ist es vorgesehen, dass der Bolzen das Hohlprofil mit mindestens einem Schenkel verklemmen kann. So kann der Bolzen an einem L-förmigen Profil senkrecht zu einer Schenkelfläche schraubbar befestigt werden. Ein L-Schenkel des Profils kann senkrecht und ein L-Schenkel waagrecht zum Schenkel der Verbindungsvorrichtung ausgerichtet sein. Die Verbindungsvorrichtung wird in das Hohlprofil eingeschoben, bis ein L-Schenkel des L-förmigen Profils am Hohlprofil ansteht, dann wird der Bolzen von außen mit dem Hohlprofil verklemmt.

Vorteilhaft ist es aber auch, wenn die Verbindungsvorrichtung zumindest ein Anschlagselement aufweist. Durch das Anschlagselement kann die maximale Eindringtiefe der Schenkel in das Hohlprofil begrenzt werden. Sind im Hohlprofil und in den Schenkeln der Verbindungsvorrichtung Bohrungen für zum Beispiel einen Sicherungsbolzen vorhanden, so wird durch ein Anschlagselement erleichtert, diese Bohrungen deckungsgleich übereinander zu positionieren. Besonders leicht lässt sich solch ein Anschlagselement durch ein Profil realisieren, zum Beispiel ein H-Profil, dass über die Schenkel gesteckt wird und fest mit den Schenkeln verbunden wird. Das Profil bildet gegenüber den Schenkeln einen erhabenen Rand, an dem das Hohlprofil beim Einführen der Verbindungsvorrichtung ansteht.

Die Verbindungsvorrichtung sollte mindestens eine Spreizvorrichtung aufweisen, die ein Auseinanderspreizen der Schenkel ermöglicht. Diese Spreizvorrichtung kann durch eine einfache Stellschraube, die vorzugsweise zwischen zwei benachbarten Schenkeln oder sich an einem Festpunkt abstützend angreift, realisiert werden. Aber auch im Sinne des Erfinders ist es, über Hebelelemente eine kräfteschonende Verstellung der Schenkel zu ermöglichen. So kann in der Ausführung der Spreizvorrichtung als Totpunkthebel ein besonders schnelles Spreizen der Schenkel erreicht werden. Außerdem kann der Totpunkthebel so ausgeführt sein, dass dieser bei gespreizten Schenkeln ein ungewolltes Zusammenfalten der Schenkel verhindert.

Es ist weiterhin vorteilhaft, wenn die Spreizvorrichtung am Anschlagselement angreift. So ist das Anschlagselement meist vom Drehpunkt der Schenkel einige Zentimeter entfernt. Hierdurch kann durch das Hebelverhältnis auch das Verhältnis: Kraft zum Betätigen der Spreizvorrichtung zu Klemmkraft der Schenkel optimiert werden. Es ergibt sich ein weiterer Vorteil durch die Anbringung der Spreizvorrichtung am Anschlagselement. Das Anschlagselement und somit die Spreizvorrichtung liegen nun direkt am Ende des Hohlprofils an. Die Klemmung beziehungsweise Klemmwirkung der Schenkel, die in das Hohlprofil eintauchen, kann hierdurch auch optisch kontrolliert werden.

Eine verbesserte Ausführungsform der Zweierkombination an der Verbindungsvorrichtung sieht vor, mindestens ein in der Höhe verstellbares Stützrad anzubringen. In der Regel ist eine Zweierkombination von zwei Lenk- und Antriebseinheiten auch mit zwei Verbindungsvorrichtungen versehen. Werden die zwei Lenk- und Antriebseinheiten voneinander getrennt, so verbleibt an jeder Lenk- und Antriebseinheiten eine Verbindungsvorrichtung mit Stützrad. Eine Lenk- und Antriebseinheit mit zumindest einer Verbindungsvorrichtung mit Stützrad kann somit als dreirädrige Anordnung stabil und sicher stehen. Die Höhenverstellung des Stützrades hat weiter Vorteile. So wird die Montage der Verbindungsvorrichtung durch die Anpassung an die Höhe der Lenk- und Antriebseinheit wesentlich erleichtert. Ein weiterer Vorteil ist, dass die Lenk- und Antriebseinheit durch Höhenverstellung am Stützrad um die Vorderachse gekippt werden kann, um weitere Montagearbeiten, zum Beispiel die Montage des Chassis, zu erleichtern.

Ist das Stützrad zusätzlich zur Stützradachse auch um die senkrecht dazu liegende Achse drehbar, so ist hierdurch eine Möglichkeit gegeben, eine einzige Lenk- und Antriebseinheit mit einem Verbindungselement über das Stützrad lenkbar zu rollen. Hierfür ist keine lenkfähige Vorderradachse notwendig, oder die Vorderachse kann gesperrt sein.

Es ist auch vorteilhaft, wenn das Stützrad an der Verbindungsvorrichtung an einem schwenkbaren Auslegerarm befestigt ist. Wird der Auslegerarm in entgegengesetzter Richtung zur Vorderradachse der Lenk- und Antriebseinheit ausgeschwenkt, so wird ein langer Radstand der dreirädrigen Anordnung ermöglicht. Eine stabile fahrfähige Anordnung wird hierdurch ermöglicht.

Zusätzliche Merkmale und Vorteile der Erfindung ergeben sich aus den nachfolgenden Beschreibungen bevorzugter Ausführungsbeispiele mit Bezug auf die Zeichnungen.

Die Erfindung soll nachfolgend anhand der Zeichnungen näher erläutert werden. Es stellen dar:
- Figur 1:: Seitenansicht einer Zweierkombination von Lenk- und Antriebseinheiten, wobei an einer Lenk- und Antriebseinheit eine Verbindungsvorrichtung ange- bracht ist;
- Figur 2:: Seitenansicht von zwei Lenk- und Antriebseinhei- ten mit besonderer Verbindungsvorrichtung, die über ein höhenregulierbares Stützrad verfügt.

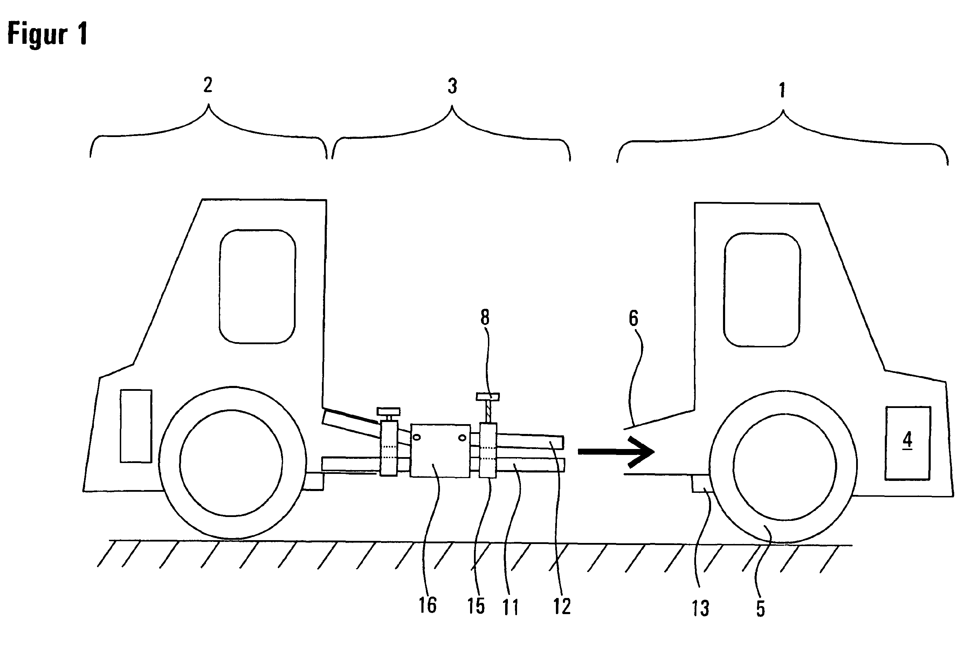

Die Figur 1 zeigt in einer Seitenansicht zwei Lenk- und Antriebseinheiten 1 und 2, wobei die zweite Lenk- und Antriebseinheit 2 eine erfindungsgemäße Verbindungsvorrichtung 3 aufweist, um mit der ersten Lenk- und Antriebseinheit 1 verbunden zu werden.

Ein Hohlprofil 6 im Chassis der Lenk- und Antriebseinheiten 1 und 2 weist zum rückwärtigen Ende einen konischen, sich leicht verengenden Querschnitt auf. Die Verbindungsvorrichtung 3 besteht im wesentlichen aus Vierkanthohlprofilen. Das untere Vierkanthohlprofil bildet den feststehenden Schenkel 11 der Verbindungsvorrichtung 3. In der Mitte des feststehenden Schenkels 11 sind an zwei gegenüberliegenden Seiten zwei Halteplatten 16 angeschweißt. Diese Halteplatten 16 können zwei weitere Schenkel 12, die schwenkbar in bezug auf den feststehenden Schenkel 11 ausgeführt sind, aufnehmen. Links und rechts neben den Halteplatten 16 sind in definiertem Abstand jeweils ein Anschlagselement 15 am feststehenden Schenkel 11 angeschweißt. Diese Anschlagselemente 15, die aus je einem H-förmigen Profil bestehen können, ermöglichen einerseits, dass die beiden Schenkel 11 und 12 einen gewissen Grundabstand zueinander haben und beim Verklemmen der Schenkel 11 und 12 im Hohlprofil 6 nur ein relativ kurzer Spreizweg der Schenkel 11 und 12 notwendig ist.

Weiterhin ermöglichen diese Anschlagselemente 15, die gegenüber den Vierkantprofilen einen abstehenden Rand bilden, dass die beiden Schenkel 11 und 12 nur bis zu einer definierten Länge in das Hohlprofil 6 eingeschoben werden können. Die Gesamtlänge der Verbindungsvorrichtung 3 beziehungsweise der Abstand der Anschlagselemente 15 ist so abgestimmt, dass zwei mit Hilfe von Verbindungsvorrichtungen 3 verbundene Lenk- und Antriebseinheiten 1 und 2 einen zum Zweck des Fahrens ausreichend großen Radstand ihrer Vorderachsen aufweisen.

Um ein Ende einer Verbindungsvorrichtung 3 mit dem Hohlprofil 6 einer Lenk- und Antriebseinheit zum Beispiel 2 zu verbinden, werden beide Schenkel 11 und 12 in das Hohlprofil geschoben, bis der Rand des Anschlagselements 15 am Rand des Hohlprofils 6 ansteht. Durch Drehen der Verstellschraube 8, die mit dem schwenkbaren Schenkel 12 verbunden ist, wir der Schenkel 12 vom Schenkel 11 weggespreizt, bis beide Schenkel 11 und 12 möglichst flächig an der Innenwand des Hohlprofils 6 anliegen. Durch den zum rückwärtigen Ende der Lenk- und Antriebseinheit 1 und 2 sich konisch verengenden Querschnittsverlauf des Hohlprofils 6 wird wirksam verhindert, dass die verklemmte Verbindungsvorrichtung 3 aus dem Hohlprofil 6 herausrutschen kann. Eine derartig verklemmte Verbindungsvorrichtung 3 wird an der linken Lenk- und Antriebseinheit 2 in Figur 1 gezeigt.

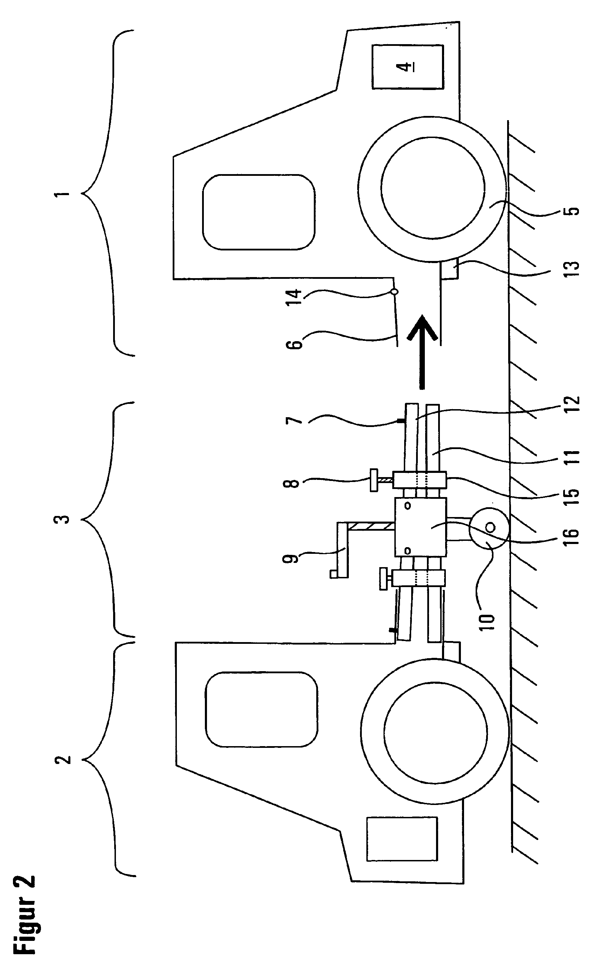

Die Figur 2 zeigt in einer Seitenansicht zwei Lenk- und Antriebseinheiten 1 und 2, wobei die zweite Lenk- und Antriebseinheit 2 mit einer besonderen Verbindungsvorrichtung 3 verbunden ist.

Das Hohlprofil 6 der Lenk- und Antriebseinheiten 1 und 2 weist zum rückwärtigen Ende einen konischen, sich geringfügig verengenden Querschnitt auf. Die Verbindungsvorrichtung 3 besteht im wesentlichen aus Vierkanthohlprofilen. Das untere Vierkanthohlprofil bildet den feststehenden Schenkel 11 der Verbindungsvorrichtung 3. In der Mitte des feststehenden Schenkels 11 sind, an zwei gegenüberliegenden Seiten, zwei Halteplatten 16 angeschweißt. An diesen Halteplatten 16 sind zwei weitere Schenkel 12, die schwenkbar bezüglich dem feststehenden Schenkel 11 sind, angebracht.

Links und rechts neben den Halteplatten 16 sind in definiertem Abstand jeweils ein Anschlagselement 15, das aus einem H-förmigen Profil bestehen kann, am feststehenden Schenkel 11 angeschweißt. Diese Anschlagselemente 15 ermöglichen einerseits, dass die beiden Schenkel 11 und 12 einen gewissen Grundabstand zueinander haben und dass zum Verklemmen der Schenkel 11 und 12 im Hohlprofil 6 nur ein relativ kurzer Spreizweg der Schenkel 11 und 12 notwendig ist. Weiterhin ermöglichen die Anschlagselemente 15, die gegenüber den Vierkantprofilen einen abstehenden Rand bilden, dass die beiden Schenkel 11 und 12 nur bis zu einer definierten Länge in das Hohlprofil 6 eingeschoben werden können. Die Gesamtlänge der Verbindungsvorrichtung 3 beziehungsweise der Abstand der Anschlagselemente 15 ist so abgestimmt, dass zwei mittels Verbindungsvorrichtungen 3 verbundene Lenk- und Antriebseinheiten 1 und 2 einen zum Zweck des Fahrens ausreichend großen Radstand ihrer Vorderachsen aufweisen.

Um ein Ende einer Verbindungsvorrichtung 3 mit dem Hohlprofil 6 einer Lenk- und Antriebseinheit 1 und 2 zu verbinden, werden beide Schenkel 11 und 12 in das Hohlprofil geschoben, bis der Rand des Anschlagselements 15 am Rand des Hohlprofils 6 ansteht.

Das Besondere an dieser Verbindungsvorrichtung 3 ist, dass an beiden schwenkbaren Schenkel 12 ein Sicherungsbolzen 7 angebracht ist. Im Hohlprofil 6 der Lenk- und Antriebseinheit 1 und 2 ist entsprechend für den Sicherungsbolzen 7 eine passende Bohrung 14 vorhanden. Durch Drehen der Verstellschraube 8, die mit den schwenkbaren Schenkeln 12 verbunden ist, werden die Schenkel 12 vom Schenkel 11 weggespreizt. Die Sicherungsbolzen 7 werden in die Bohrungen 14 der Hohlprofile 6 eingeführt. Diese einfache und effektive Art der Sicherung verhindert, dass auch bei gleichmäßigem Querschnittsverlauf oder sich konisch zum rückseitigen Ende hin erweiternden Hohlprofils 6, ein in das Hohlprofil 6 eingeschobene Verbindungsvorrichtung 3 herausrutschen kann.

Eine weitere Besonderheit der dargestellten Verbindungsvorrichtung 3 ist das Stützrad 10, das mit Hilfe von einer Spindelstange 9 in der Höhe einstellbar ist. Die Höhe des Stützrades 10 kann zur leichteren Montage der Verbindungsvorrichtung 3 an einem Hohlprofil 6 einer Lenk- und Antriebseinheit 1 und 2 auf die Höhe des Hohlprofils 6 eingestellt werden. In der Regel weisen Lenk- und Antriebseinheiten 1, 2 zwei Hohlprofile 6 an ihren rückseitigen Enden auf. Somit werden zwei Lenk- und Antriebseinheiten 1, 2 auch mit zwei Verbindungsvorrichtungen 3 verbunden. Verfügen beide Verbindungsvorrichtungen 3 über ein Stützrad 10 so ergibt sich beim Trennen der beiden Lenk- und Antriebseinheiten 1, 2 ein weiterer Vorteil. Wird beim Trennen der Lenk- und Antriebseinheiten, an einer Lenk- und Antriebseinheit 1 nur eine Verbindungsvorrichtung 3 gelöst und an der anderen Lenk- und Antriebseinheit 2 die andere Verbindungsvorrichtung 3, so verfügen beide Lenk- und Antriebseinheiten 1 und 2 jeweils über "eigene" Verbindungsvorrichtung 3 mit "eigenem" Stützrad 10. Durch das Stützrad 10 wird eine einzelne Lenk- und Antriebseinheit gegen Verkippen um die Vorderachse gesichert und gleichzeitig rollfähig ausgestattet.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

Insgesamt wird also durch die Erfindung, eine neue Verbindungsmöglichkeit zweier Lenk- und Antriebseinheiten geschaffen, die hinsichtlich des Aufwandes bei der Montage an den Lenk- und Antriebseinheiten beziehungsweise bei der Demontage von den Lenk- und Antriebseinheiten in wesentlich kürzerer Zeit angebracht beziehungsweise entfernt werden kann. Gleichzeitig wird es durch die besondere Ausführung der Verbindungsvorrichtung mit einem Stützrad ermöglicht, dass nach dem Trennen einer Zweierkombination von Lenk- und Antriebseinheiten, beide Lenk- und Antriebseinheiten für sich allein standsicher abgestellt werden können. Innerhalb der Fertigungsstätte kann eine Lenk- und Antriebseinheit durch das Stützrad als eine Art dreirädriges Gefährt bewegt und verfahren werden.

### Bezugszeichenliste

- 1: erste Lenk- und Antriebseinheit
- 2: zweite Lenk- und Antriebseinheit
- 3: Verbindungsvorrichtung
- 4: Motorblock
- 5: Rad der Vorderachse
- 6: Hohlprofil
- 7: Sicherungsbolzen am schwenkbaren Schenkel
- 8: Klemmschraube / Verstellschraube
- 9: Spindel zur Höhenverstellung der Verbindungsvorrich- tung
- 10: Stützrad
- 11: feststehender Schenkel
- 12: schwenkbarer Schenkel
- 13: Rahmen der Lenk- und Antriebseinheit
- 14: Bohrung im Hohlprofil
- 15: Anschlagselement
- 16: Halteplatte für schwenkbare Schenkel 12

## Patentansprüche

1. Zweierkombination mit Lenk- und Antriebseinheiten (1, 2) zum kombinierten Transport von zwei Lenk- und Antriebseinheiten (1, 2) von selbstfahrenden, frontangetriebenen Kraftfahrzeugen, wobei die zwei Lenk- und Antriebseinheiten (1, 2) an ihren rückseitigen Enden verbunden sind, **dadurch gekennzeichnet, dass** eine Verbindungsvorrichtung (3) vorgesehen ist, deren erstes Ende in ein Hohlprofil (6) am rückseitigen Ende einer ersten Lenk- und Antriebseinheit (1) und deren zweites Ende in ein Hohlprofil (6) der zweiten Lenk- und Antriebseinheit (2) beidseits lösbar eingreift, wobei die Hohlprofile (6) jeweils Teil eines Chassis der Lenk- und Antriebseinheiten (1, 2) sind und Mittel vorgesehen sind, die die Verbindungsvorrichtung (3) mit den Lenk- und Antriebseinheiten (1, 2) verbinden.

2. Zweierkombination gemäß dem voranstehenden Anspruch 1, **dadurch gekennzeichnet, dass** die Verbindungsvorrichtung (3) an beiden Enden jeweils zwei Schenkel (11, 12) aufweist, wobei jeweils mindestens ein Schenkel (12) schwenkbar gegenüber dem anderen Schenkel (11) ausgeführt ist.

3. Zweierkombination gemäß einem der voranstehenden Ansprüche 1 und 2, **dadurch gekennzeichnet, dass** das Hohlprofil (6) einen Querschnitt aufweist, der sich konisch zum rückseitigen Ende der Lenk- und Antriebseinheit (1, 2) verengt.

4. Zweierkombination gemäß dem voranstehenden Anspruch 2, **dadurch gekennzeichnet, dass** die schwenkbaren Schenkel (12) an einer Lagerung befestigt sind.

5. Zweierkombination gemäß einem der voranstehenden Ansprüche 2 bis 4, **dadurch gekennzeichnet, dass** mindestens ein Bolzen (7) an mindestens einem Schenkel (11, 12) der Verbindungsvorrichtung (3) befestigt ist.

6. Zweierkombination gemäß dem voranstehenden Anspruch 5, **dadurch gekennzeichnet, dass** der mindestens eine Bolzen in eine Bohrung (14) im Hohlprofil (6) der Lenk- und Antriebseinheit (1, 2) eingreifen kann.

7. Zweierkombination gemäß einem der voranstehenden Ansprüche 5 und 6, **dadurch gekennzeichnet, dass** der mindestens eine Bolzen (7) das Hohlprofil (6) mit mindestens einem Schenkel (11, 12) verklemmen kann.

8. Zweierkombination gemäß einem der voranstehenden Ansprüche 2 bis 7, **dadurch gekennzeichnet, dass** die Verbindungsvorrichtung (3) zumindest ein Anschlagselement (15) aufweist, welches die maximale Einführlänge der Schenkel (11, 12) in das Hohlprofil (6) begrenzt.

9. Zweierkombination gemäß einem der voranstehenden Ansprüche 2 bis 8, **dadurch gekennzeichnet, dass** die Verbindungsvorrichtung (3) mindestens eine Spreizvorrichtung (8) aufweist, die ein Auseinanderspreizen der Schenkel (11, 12) ermöglicht.

10. Zweierkombination gemäß dem voranstehenden Anspruch 9, **dadurch gekennzeichnet, dass** die Spreizvorrichtung (8) am Anschlagselement (15) angreift.

11. Zweierkombination gemäß einem der voranstehenden Ansprüche 1 bis 10, **dadurch gekennzeichnet, dass** mindestens ein in der Höhe verstellbares Stützrad (10) an der Verbindungsvorrichtung (3) angebracht ist.

12. Zweierkombination gemäß dem voranstehenden Anspruch 11, **dadurch gekennzeichnet, dass** das Stützrad (10) senkrecht zur Stützradachse drehbar gelagert ist.

13. Zweierkombination gemäß einem der voranstehenden Ansprüche 11 und 12, **dadurch gekennzeichnet, dass** das Stützrad (10) an einem schwenkbaren Auslegearm der Verbindungsvorrichtung (3) befestigt ist.

## Claims

1. Double combination of steering and drive units (1, 2) for the combined transport of two steering and drive units (1, 2) of self-propelling, front-wheel-drive motor vehicles, the two steering and drive units (1, 2) being connected at their rear-side ends, **characterized in that** a connecting apparatus (3) is provided, the first end of which engages into a hollow profile (6) at the rear-side end of a first steering and drive unit (1) and the second end of which engages into a hollow profile (6) of the second steering and drive unit (2), releasably on both sides, the hollow profiles (6) being in each case part of a chassis of the steering and drive units (1, 2) and means being provided which connect the connecting apparatus (3) to the steering and drive units (1, 2).

2. Double combination according to preceding Claim 1, **characterized in that** the connecting apparatus (3) has in each case two limbs (11, 12) at both ends, in each case at least one limb (12) being configured such that it can be pivoted with respect to the other limb (11).

3. Double combination according to either of preceding Claims 1 and 2, **characterized in that** the hollow profile (6) has a cross section which narrows conically to the rear-side end of the steering and drive unit (1, 2).

4. Double combination according to preceding Claim 2, **characterized in that** the pivotable limbs (12) are fastened to a mounting.

5. Double combination according to one of preceding Claims 2 to 4, **characterized in that** at least one pin (7) is fastened to at least one limb (11, 12) of the connecting apparatus (3).

6. Double combination according to preceding Claim 5, **characterized in that** the at least one pin can engage into a hole (14) in the hollow profile (6) of the steering and drive unit (1, 2).

7. Double combination according to either of preceding Claims 5 and 6, **characterized in that** the at least one pin (7) can clamp the hollow profile (6) to at least one limb (11, 12).

8. Double combination according to one of preceding Claims 2 to 7, **characterized in that** the connecting apparatus (3) has at least one stop element (15) which limits the maximum insertion length of the limbs (11, 12) into the hollow profile (6).

9. Double combination according to one of preceding Claims 2 to 8, **characterized in that** the connecting apparatus (3) has at least one spreading apparatus (8) which makes it possible for the limbs (11, 12) to be spread apart.

10. Double combination according to preceding Claim 9, **characterized in that** the spreading apparatus (8) acts on the stop element (15).

11. Double combination according to one of preceding Claims 1 to 10, **characterized in that** at least one height-adjustable supporting wheel (10) is attached to the connecting apparatus (3).

12. Double combination according to preceding Claim 11, **characterized in that** the supporting wheel (10) is mounted such that it can be rotated perpendicularly with respect to the supporting-wheel axle.

13. Double combination according to either of preceding Claims 11 and 12, **characterized in that** the supporting wheel (10) is fastened to a pivotable outrigger arm of the connecting apparatus (3).

## Revendications

1. Tandem d'unités de direction et d'entraînement (1, 2) pour le transport combiné de deux unités de direction et d'entraînement (1, 2) de véhicules automobiles automoteurs, à traction avant, les deux unités de direction et d'entraînement (1, 2) étant connectées au niveau de leurs extrémités arrières, **caractérisé en ce qu'**un dispositif de connexion (3) est prévu, dont la première extrémité vient en prise dans un profilé creux (6) à l'extrémité arrière d'une première unité de direction et d'entraînement (1) et dont la deuxième extrémité vient en prise dans un profilé creux (6) de la deuxième unité de direction et d'entraînement (2), et ce de manière amovible de part et d'autre, les profilés creux (6) faisant à chaque fois partie d'un châssis des unités de direction et d'entraînement (1, 2) et des moyens étant prévus, lesquels connectent le dispositif de connexion (3) aux unités de direction et d'entraînement (1, 2).

2. Tandem selon la revendication précédente 1, **caractérisé en ce que** le dispositif de connexion (3) présente aux deux extrémités, à chaque fois deux branches (11, 12), à chaque fois au moins une branche (12) étant réalisée de manière à pouvoir pivoter par rapport à l'autre branche (11).

3. Tandem selon l'une quelconque des revendications précédentes 1 et 2, **caractérisé en ce que** le profilé creux (6) présente une section transversale qui se rétrécit de manière conique vers l'extrémité arrière de l'unité de direction et d'entraînement (1, 2).

4. Tandem selon la revendication précédente 2, **caractérisé en ce que** les branches pivotantes (12) sont fixées sur un palier.

5. Tandem selon l'une quelconque des revendications précédentes 2 à 4, **caractérisé en ce qu'**au moins un boulon (7) est fixé sur au moins une branche (11, 12) du dispositif de connexion (3).

6. Tandem selon la revendication précédente 5, **caractérisé en ce que** l'au moins un boulon peut venir en prise dans un alésage (14) dans le profilé creux (6) de l'unité de direction et d'entraînement (1, 2).

7. Tandem selon l'une quelconque des revendications précédentes 5 et 6, **caractérisé en ce que** l'au moins un boulon (7) peut serrer le profilé creux (6) avec au moins une branche (11, 12).

8. Tandem selon l'une quelconque des revendications précédentes 2 à 7, **caractérisé en ce que** le dispositif de connexion (3) présente au moins un élément de butée (15) qui limite la longueur d'insertion maximale des branches (11, 12) dans le profilé creux (6).

9. Tandem selon l'une quelconque des revendications précédentes 2 à 8, **caractérisé en ce que** le dispositif de connexion (3) présente au moins un dispositif d'écartement (8) qui permet un écartement des branches (11, 12) l'une par rapport à l'autre.

10. Tandem selon la revendication précédente 9, **caractérisé en ce que** le dispositif d'écartement (8) vient en prise sur l'élément de butée (15).

11. Tandem selon l'une quelconque des revendications précédentes 1 à 10, **caractérisé en ce qu'**au moins une roue de support déplaçable en hauteur (10) est montée sur le dispositif de connexion (3).

12. Tandem selon la revendication précédente 11, **caractérisé en ce que** la roue de support (10) est montée de manière à pouvoir tourner perpendiculairement à l'axe de la roue de support.

13. Tandem selon l'une quelconque des revendications précédentes 11 et 12, **caractérisé en ce que** la roue de support (10) est fixée sur un bras de potence pivotant du dispositif de connexion (3).
